# EUROPEAN PATENT APPLICATION

(11) **EP 4 266 403 A1**
(43) Date of publication of application: **25.10.2023**
(21) Application number: 21906612.3
(22) Date of filing: 14.12.2021
(51) Int. Cl.: H01M 4/36

(54) **ACTIVE MATERIAL PARTICLES AND METHOD FOR PRODUCING ACTIVE MATERIAL PARTICLES**

(30) Priority: 17.12.2020 JP 2020209077
(71) Applicant: CANON KABUSHIKI KAISHA, Tokyo 146-8501 (JP)
(72) Inventor: AOTANI, Takaharu, Tokyo 146-8501 (JP); KUBO, Kenta, Tokyo 146-8501 (JP); TANIUCHI, Hiroshi, Tokyo 146-8501 (JP); USAMI, Hirokazu, Tokyo 146-8501 (JP)
(74) Representative: TBK
(86) International application number: PCT/JP2021/046047
(87) International publication number: WO 2022/131250

(57) **Abstract**

Active material particles for use in an active material layer include a particle portion containing an active material, and a protective layer covering the surface of the particle portion.

## Description

### Technical Field

The present invention relates to active material particles and a method for producing active material particles.

### Background Art

An electrode structure for a secondary battery has been known in which a change in the volume of an active material due to the intercalation and deintercalation of lithium ions is reduced by providing fine protruding portions. Japanese Patent Laid-Open No. 2015-220080 discloses that a single lithium cobalt oxide layer having fine protruding portions is formed on a current collector substrate by a flux method in which a current collector substrate including a cobalt-containing layer of plating and a lithium-containing compound are brought into contact with each other and heated.

It is known that when a secondary battery is produced, the charge-discharge characteristics are improved by allowing an active material layer to have a two-dimensional or three-dimensional distribution of the characteristics, composition, and the like or by devising arrangement in the layer or in the thickness direction in accordance with a current collector and an electrolyte combined. Japanese Patent Laid-Open No. 2012-104270 discloses that an anode active material layer having higher voidage at a position closer to a current collector layer is formed by adjusting the particle size distribution of active material particles in the thickness direction of the layer.

### Citation List

### Patent Literature

PTL 1: Japanese Patent Laid-Open No. 2015-220080
PTL 2: Japanese Patent Laid-Open No. 2012-104270

### Summary of Invention

### Technical Problem

The active material particles having a surface structure ensuring ionic conductivity obtained by the method described in Japanese Patent Laid-Open No. 2015-220080 were deposited on a metal layer. For this reason, it has been difficult to freely arrange the active material produced by the method disclosed in Japanese Patent Laid-Open No. 2015-220080 inside a secondary battery.

It is conceivable that active material particles having a surface structure ensuring ionic conductivity may be produced by separating an active material having a surface structure ensuring ionic conductivity, which is produced by the method described in Japanese Patent Laid-Open No. 2015-220080, from a substrate including a layer of plating. However, there has been a concern that the surface structures of the active material particles may fall off during the separation process, thereby decreasing the ionic conductivity of the active material particles.

Even if the active material particles having a surface structure ensuring ionic conductivity produced by the method described in Japanese Patent Laid-Open No. 2015-220080 are separated, it is difficult to handle the active material particles while maintaining the surface structure in handling of the active material particles, such as transportation, deposition, and patterning. That is, even if active material particles having a surface structure ensuring ionic conductivity are formed, there has been a concern that deterioration in quality including desired ionic conductivity may occur due to, for example, contamination, falling of a fine structure, or contact with an active material inevitably contained, in handling of the active material particles.

It is an object of the present application to provide a self-supporting active material with reduced risk of quality degradation due to handling.

Active material particles according to an embodiment of the present invention are active material particles for use in an active material layer and include self-supporting active material particles that include a particle portion containing an active material and that a protective layer covering the surface of the particle portion.

With respect to active material particles according to an embodiment of the present invention, the active material particles according to Claim 1, for use in the active material layer, in which the protective layer is solid, include a particle portion containing an active material and the solid protective layer covering the surface of the particle portion.

According to the present invention, it is possible to provide a self-supporting active material with reduced risk of quality deterioration due to handling.

### Brief Description of Drawings

[Fig. 1A] Fig. 1A is a schematic view illustrating the appearance of an active material particle according to a first embodiment.
[Fig. 1B] Fig. 1B is a schematic view illustrating a cross section of an active material particle according to the first embodiment.
[Fig. 2A] Fig. 2A is a flowchart illustrating a method for producing active material particles according to the first embodiment.
[Fig. 2B] Fig. 2B is a schematic process diagram illustrating a method for producing active material particles according to the first embodiment.
[Fig. 3A] Fig. 3A illustrates the appearance of active material particles according to a second embodiment.
[Fig. 3B] Fig. 3B illustrates a cross section of active material particles according to the second embodiment.
[Fig. 3C] Fig. 3C illustrates a cross section of active material particles according to third and fourth embodiments.
[Fig. 3D] Fig. 3D illustrates a cross section of active material particles according to the third and fourth embodiments.
[Fig. 4A] Fig. 4A is a flowchart illustrating an example of a method for producing active material particles according to a first modification of the first embodiment.
[Fig. 4B] Fig. 4B is a flowchart illustrating an example of a method for producing active material particles according to a second modification of the first embodiment.
[Fig. 4C] Fig. 4C is a flowchart illustrating an example of a method for producing active material particles according to a third modification of the first embodiment.
[Fig. 5A] Fig. 5A is a schematic cross-sectional view illustrating the layer structure of a secondary battery according to a reference embodiment.
[Fig. 5B] Fig. 5B is a schematic cross-sectional view illustrating the layer structure of an anode active material layer according to a reference embodiment.
[Fig. 5C] Fig. 5C is a flowchart illustrating a method for producing a secondary battery according to a reference embodiment.
[Fig. 5D] Fig. 5D is a flowchart illustrating a method for producing an anode active material layer according to a reference embodiment.
[Fig. 6A] Fig. 6A is a flowchart illustrating a method for producing an anode active material layer according to fifth and sixth embodiments.
[Fig. 6B] Fig. 6B is a flowchart illustrating a method for producing an anode active material layer according to the fifth and sixth embodiments.

### Description of Embodiments

Preferred embodiments of the present invention are described in detail below with reference to the drawings. Dimensions, materials, shapes, relative arrangements, and the like of constituent members described in these embodiments are not intended to limit the scope of the present invention.

### (First Embodiment)

### <Structure of Active Material Particle>

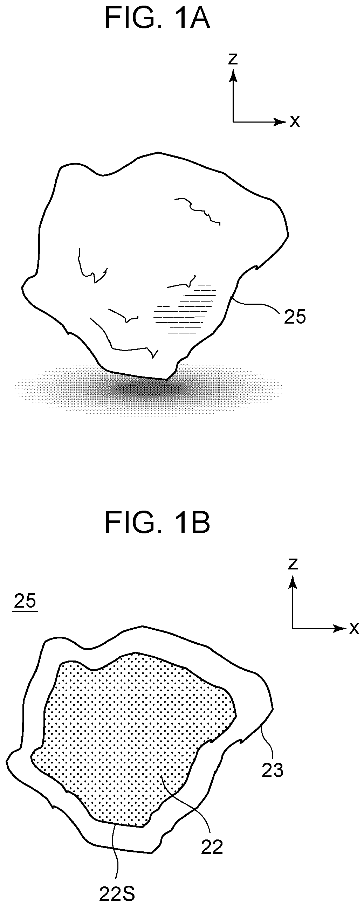

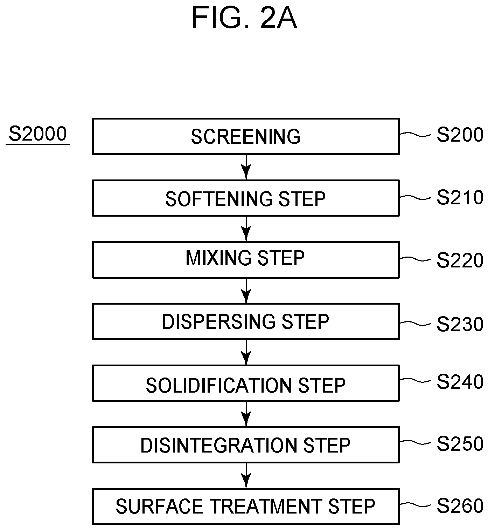

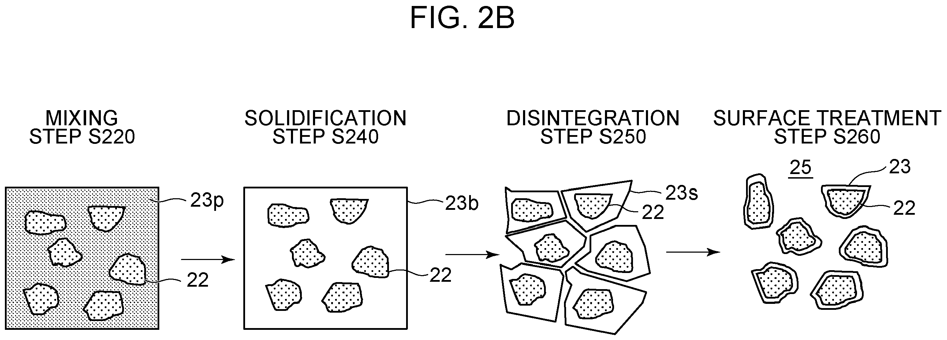

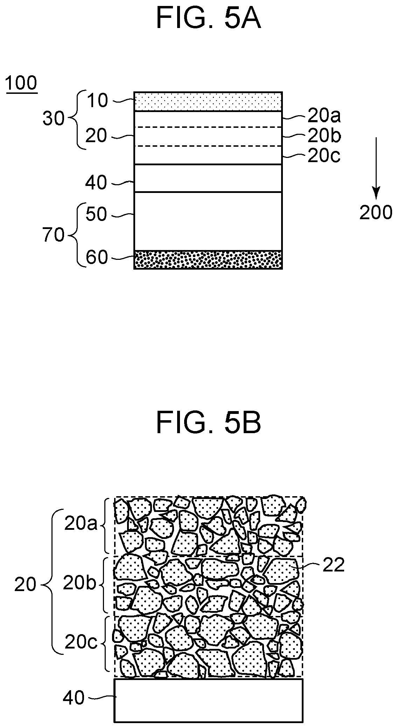

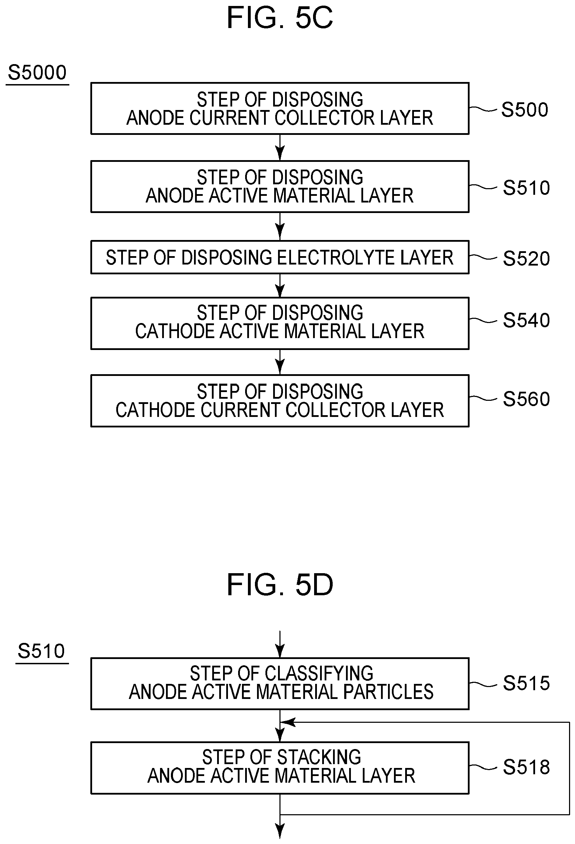

The structure and production method of active material particles 25 according to a first embodiment will be described with reference to Figs. 1A, 1B, 2A, 2B, 5A, and 5B. Fig. 1A is a schematic view illustrating the appearance of each active material particle according to the first embodiment. Fig. 1B is a schematic view illustrating a cross section of the active material particle according to the first embodiment. Fig. 2A is a flowchart illustrating a method for producing active material particles according to the first embodiment. Fig. 2B is a schematic process diagram illustrating a method for producing active material particles according to the first embodiment. Fig. 5A is a schematic cross-sectional view illustrating the layer structure of a secondary battery according to a reference embodiment. Fig. 5B is a schematic cross-sectional view illustrating the layer structure of an anode active material layer according to the reference embodiment. Fig. 5C is a flowchart illustrating a method for producing a secondary battery according to the reference embodiment. Fig. 5D is a flowchart illustrating a method for producing an anode active material layer according to the reference embodiment.

The structure of each of the active material particles 25 including a protective layer 23 according to the first embodiment will be described with reference to Figs. 1A and 1B. Each of the active material particles 25 of the present embodiment includes a particle portion 22 and the protective layer 23 covering the surface of the particle portion 22. The protective layer 23 covers the surface 22S of the particle portion 22 for the purpose of protecting the surface of the particle portion 22 corresponding to a naked active material particle from chemical erosion from the atmosphere and physical damage from the outside, for example. In the range of the protection purpose described above, the protective layer 23 is disposed on the surface 22S in the form of a continuous film, a discontinuous film, a porous film, a laminated film, or islands. In other words, the protective layers 23 cover the respective particle portions 22. The active material particles 25 of the present embodiment include the protective layer 23 that protects the particle portion 22 for each particle. The active material particles 25 of the present embodiment include the protective layer 23 so as to have a particle size that is 1.2 or more times the particle size of the particle portion 22.

In the specification of the present application, the particle portion 22 may be referred to as a bare active material particle 22, an unprotected active material particle 22, or an active material particle 22 without protection. Since the active material particles 25 cover the surfaces 22S of the particle portions 22, the particle portions 22 containing the active material is protected during a handling period including a process of selling, storing, and transporting the active material particles 25 as a commercial product and a process of storing, depositing, and patterning after purchase. In other words, the active material particles 25 cover the surfaces 22S of the particle portions 22 to protect the surfaces 22S of the particle portions 22 during the handling period of the particle portions 22.

The protective layer 23 has substantially no viscosity. This reduces the risk of inclusions of, for example, dust and fine particles during the handling period, thereby reducing the risk of contamination of the particle portion 22.

The low viscosity of the protective layer 23 indicates that the protective layer 23 is solid or the protective layer 23 has no fluidity. The fact that the protective layer 23 does not have viscosity not only reduces the risk of contamination of the particle portion 22 during handling, but also ensures flexibility in the arrangement of the active material raw material as the precursor of an anode active material layer 20. The fact that the protective layer 23 does not have viscosity reduces the adhesion between the active material raw material and a production apparatus or between the active material raw material and a jig or tool during handling, reducing the number of steps including a cleaning step.

For the viscosity of the protective layer 23, a material having substantially no fluidity in the temperature range of 10°C or higher and 30°C or lower, which corresponds to normal temperature, is selected. The protective layer 23 has a viscosity coefficient of 1,000 Pa·s or less in the temperature range of 10°C or higher and 30°C or lower. A viscosity coefficient of 1,000 Pa·s corresponds to a viscosity coefficient of 1 × 10⁶ cP or less. Such a viscosity coefficient is identified as a viscosity coefficient with respect to a shear force or a tensile force.

The handling period related to the use cases and issues of the unprotected active material particles 22 includes a process of selling, storing, and transporting the naked active material particles 22 as a product, and a process of storing, depositing, and patterning after purchase. A process of depositing the unprotected active material particles 22 includes a step S510 of disposing an anode active material layer and a step S540 of disposing a cathode active material layer included in a method S5000 for producing a secondary battery illustrated in Fig. 5C. The method S5000 for producing a secondary battery is an example of a method for producing a secondary battery 100, the secondary battery 100 being illustrated in Fig. 5A.

The step S510 of disposing an anode active material layer further includes a step S515 of disposing active material particles and a step S518 of stacking an anode active material layer, as illustrated in Fig. 5C. The step S510 of disposing the anode active material layer is an example of a method for producing the anode active material layer 20 including the sublayers 20a to 20c, the anode active material layer 20 being illustrated in Fig. 5B. The anode active material layer 20 may contain an electrolyte, not illustrated in Fig. 5B, in the anode.

The protective layer 23 further has the property of being selectively removable from the surface 22S while leaving the particle portion 22. The selectively removable property is also referred to as selective removability. The protective layers 23 have the selective removability for the particle portions 22 and thus protect the particle portions 22 and the surfaces 22S of the particle portions 22 during a handling period from the time of distribution of the active material particles 25 as a commercial product to immediately before the formation of the anode active material layer 20 and a cathode active material layer 50. After the handling period, the protective layers 23 can be selectively removed so as to expose the surfaces 22S of the active material particles 22 constituting the anode active material layer 20 and the cathode active material layer 50 at the stage of transporting active material ions.

The selective removability for the particle portions 22 includes at least one of erodibility that permits chemical removal, a thermophysical property that permits removal by heating, or a strength property that permits removal by an external force.

The chemical erodibility includes a mode in which the protective layers 23 over the particle portions 22 are selectively eroded by the use of at least one of a predetermined solvent, a predetermined ion, a predetermined gas, and a predetermined plasma. A method of selective removal using the erodibility includes dry etching and wet etching using an etchant having a specifically different etch rate between the particle portion 22 and the protective layer 23.

The method of selective removal using the thermophysical property includes at least one of a thermal decomposition reaction, a phase transition, or combustion. The method of selective removal using a difference in strength property includes at least one of milling, buffing, or blasting of particles.

### <Method for Producing Active Material Particles>

A method for producing the active material particles 25 having the protective layers 23 according to the first embodiment will be described with reference to Figs. 2A and 2B. A method S2000 for producing the active material particles 25 of the present embodiment includes a screening step S200, a softening step S210, a mixing step S220, a dispersion step S230, a solidification step S240, a disintegration step S250, and a surface treatment step S260, these steps being performed in this order.

The screening step S200 screens the unprotected active material particles 22. The softening step S210 softens the protective material to be formed into the protective layers 40 by heating. The softening step S210 for the protective material ensures fluidity of the protective material in the mixing step S220 and the dispersion step S230. The mixing step S220 mixes the unprotected active material particles 22 and the softened protective layer material 23p. The dispersion step S230 disperses the unprotected active material particles 22 contained in the mixture. This step ensures the particle size ratio (diameter ratio) of each of the protective layers 23 to a corresponding one of the particle portions 22.

In the solidification step S240, the fluidity of the protective layer material 23p is lost by cooling to obtain the protective layer 23b solidified in a bulk form and the particle portions 22 fixed to the protective layer 23b. The disintegration step S250 includes a step of disintegrating the particle portions 22 fixed to the protective layer 23b solidified in a bulk form into individual particle units. The disintegration step S230 can be performed by ball milling. The particle portions 22 protected by the protective layers 23S separated for each particle are obtained by the disintegration step S240. The separated protective layers 23S obtained in this step can be regarded as the self-supporting active material particles 25 including the particle portions 22b protected by the self-supporting protective layers 23S. The softened protective layer material 23p may be referred to as the precursor 23p of the protective layer 23.

The surface treatment step S260 includes a step of grinding protruding portions and so forth on the surfaces of the protective layers 23S, i.e., on the surfaces of the self-supporting active material particles 22 including the protective layers 23S and the particle portions 22b in order to ensure the flexibility in disposing the active material particles 22.

### (Second Embodiment)

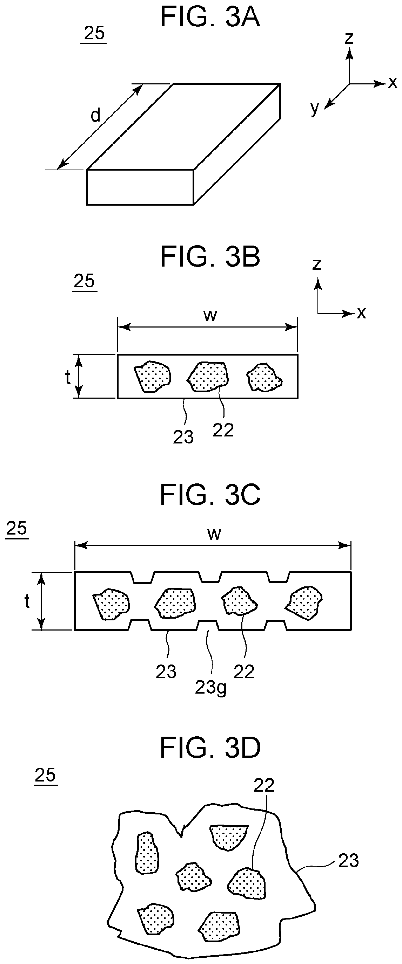

The configuration of the active material particles 25 according to a second embodiment will be described below with reference to Figs. 3A and 3B. The active material particles 25 of the present embodiment are different from the active material particles 25 according to the first embodiment in that the protective layer 23 integrally protects the multiple particle portions 22 as illustrated in Fig. 3B. As illustrated in Fig. 3A, the protective layer 23 has a layer thickness t and extends in the directions (x direction, y direction), intersecting the direction (z direction) of the layer thickness, by distances d and W larger than the layer thickness t, thereby protecting the multiple particle portions 22. In other words, the protective layer 23 or the active material particle 25 of the present embodiment has a sheet-like shape. In the sheet-like active material particle 25 of the embodiment, a layer including the active material particles extending in a sheet shape can be formed by disposing the sheet-like active material particle 25 and then removing the protective layer 23. That is, the sheet-like active material particle 25 of the present embodiment can be regarded as the precursor of the anode active material layer 20 because the particle portions 22 containing the active material are arranged in the layer direction. The sheet-like protective layer 23 of the present embodiment covers the multiple surfaces 22 corresponding to the multiple particle portions 22.

### (Third Embodiment)

The configuration of the active material particle 25 according to a third embodiment will be described below with reference to Fig. 3C. The protective layer 23 of the active material particle 25 of the present embodiment is different from the active material particle 25 of the second embodiment in that the particle portions 22 are arranged in a predetermined pattern and that grooves are provided in a lattice pattern between regions where the particle portions 22 are arranged. The active material particle 25 of the present embodiment is cut along the lattice-like grooves to obtain the active material particles 25 of the first embodiment in which each particle portion is protected. In addition, a bending force is applied to the active material particle 25 of the present embodiment in such a manner that the stress is concentrated along the lattice-like grooves, thereby providing the active material particles 25 of the first embodiment in which each particle portion is protected.

### (Fourth Embodiment)

The configuration of the active material particle 25 according to a fourth embodiment will be described below with reference to Fig. 3D. The protective layer 23 included in the active material particle 25 of the present embodiment differs from the active material particle 25 of the second and third embodiments in that it has a bulk-like general shape.

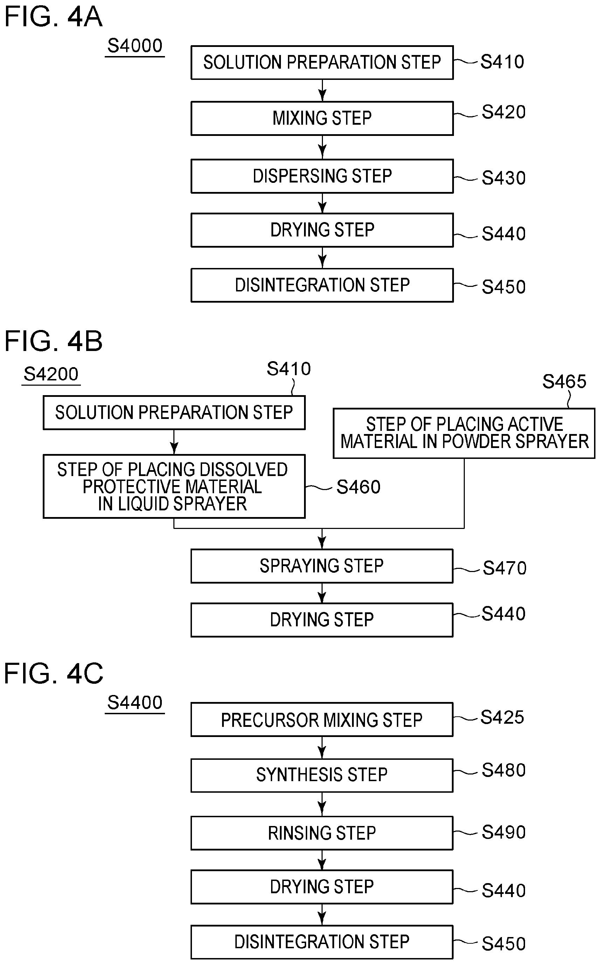

Modifications of the method S2000 for producing the active material particles according to the first embodiment will be described below with reference to Figs. 4A, 4B, and 4C.

### (First Modification)

A method S4000 for producing active material particles of a first modification differs from the method S2000 for producing the active material particles in that it includes a solution preparation step S410 and a drying step S440, as illustrated in Fig. 4A, instead of the softening step S210 and the solidification step S240.

The solution preparation step S410 is a step of dissolving a powder raw material serving as the precursor of the protective layer 23 in a solvent to prepare a solution. The solution preparation step S410 can be modified to a step of preparing a dispersion by micellization of the powder raw material serving as a precursor.

The drying step S440 is a step of evaporating the solvent from the solution to form a protective layer protecting the surfaces 22S of the active material particles 22 (particle portions 22) that are solid components.

### (Second Modification)

As illustrated in Fig. 4B, a method S4200 for producing active material particles of a second modification differs from the production method S2000 in that it includes a spraying step S470 for spraying the protective material and the particle portions and preparation steps S460 and S465 thereof and that it does not include the disintegration step S450.

The spraying step S460 and the drying step S440 may be performed simultaneously. In a process of coating the particle portions 22 with the solution containing the protective material, the aerosol is easily dried due to its large specific surface area (S/V), and the active material particles 25 separated into individual particles are formed. Thus, the disintegration step S440 is not necessarily required.

### (Third Modification)

As illustrated in Fig. 4C, a method S4400 for producing active material particles of a third modification differs from the production method S2000 in a precursor mixing step S425 of mixing the precursor of the protective material and the particle portions 22 and the synthesis step S480 of synthesizing the protective material constituting the protective layer. The production method S4400 also differs from the production method S2000 in that a rinsing step S490 is provided.

### (Fifth Embodiment)

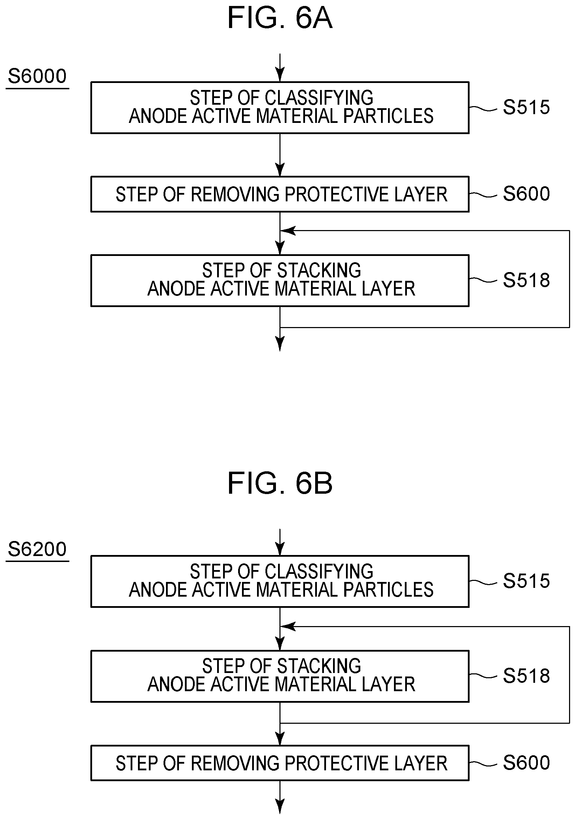

A method S6000 for producing an anode active material layer with the active material particles 25 according to the first embodiment will be described below with reference to Fig. 6A. The production method S6000 of the present embodiment differs from the process S510 of disposing the anode active material layer of the reference embodiment in that a step S600 of removing the protective layer is provided after the step S518 of stacking the anode active material layer.

### (Sixth Embodiment)

Another method S6200 for producing an anode active material layer with the active material particles 25 according to the first embodiment will be described below with reference to Fig. 6B. The production method S6200 of the present embodiment differs from the process S510 of disposing the anode active material layer of the reference embodiment in that the step S600 of removing the protective layer is provided between a step S515 of classifying the anode active material particles and the step S518 of stacking the anode active material layer.

According to the production methods of the anode active material layer S6000 and S6200 according to the fifth and sixth embodiments, the particle portions 22 containing the active material are protected by the protective layers 23 during the handling period until at least immediately before the stacking step S518 corresponding to a step of disposing the active material particles.

Materials forming the active material particles 25 according to the first to fourth embodiments will be described below.

### <Particle Portion>

### [Anode Active Material]

As the anode active material contained in the particle portion 22, a transition metal oxide or a transition metal composite oxide is used.

Lithium-manganese composite oxide Li2MnaMa1-aO3 (0.8 ≤ a ≤ 1, Ma = Co, Ni), lithium cobaltate (LiCoO2), lithium nickelate (LiNiO2), or lithium-manganese spinel (LiMn2O4) is used as the anode active material. As the anode active material, a composite metal oxide represented by general formula: LiNixCoyMnzO2 (x + y + z = 1, 0 ≤ x ≤ 1, 0 ≤ y ≤ 1, 0 ≤ z ≤ 1) or a lithium vanadium compound (LiV2O5) is used. As the anode active material, olivine type LiMbPO4 (where Mb is one or more elements selected from Co, Ni, Mn, Fe, Mg, Nb, Ti, Al, and Zr) or lithium vanadium phosphate (Li3V2(PO4)3 or LiVOPO4) is used. As the anode active material, a Li-rich solid solution represented by Li2MnO3-LiMcO2 (Mc = Mn, Co, Ni), lithium titanate (Li4Ti5O12), or LisNitCouAlvO2 (0.9 < s < 1.3, 0.9 < t + u + v < 1.1) is used. LisNitCouAlvO2 (0.9 < s < 1.3, 0.9 < t + u + v < 1.1) corresponds to a composite metal oxide.

An oxide containing Li and Co is used as the active material, as described above.

In the specification of the present application, when the particle size of the active material particles 22 is described, the particle size refers to the cumulative 50% particle size (median diameter) on a volume basis. The particle size of the active material particles 22 can be measured with a laser diffraction/scattering particle size distribution analyzer (LA-960, available from Horiba, Ltd).

The particle size of the particle portion 22 containing the anode active material can be 0.1 µm or more and 100 pm or less.

### [Cathode Active Material]

Examples of the cathode active material include metals, metal fibers, carbon materials, oxides, nitrides, silicon, silicon compounds, tin, tin compounds, and various alloy materials. The cathode active material is preferably, for example, a metal, an oxide, a carbon material, silicon, a silicon compound, tin, or a tin compound, from the viewpoint of capacity density. Examples of a metal used for the cathode active material include metal Li and In-Li, and an example of an oxide is Li4Ti5O12 (lithium titanate: LTO).

A carbon material used for the cathode active material is selected from graphite allotropes having conductivity other than diamond. The carbon material includes natural graphite (graphite), coke, a graphitizable carbon material undergoing graphitization, carbon fiber, spherical carbon, various artificial graphites, amorphous carbon, and so forth. Examples of a silicon compound used for the cathode active material include silicon-containing alloys, silicon-containing inorganic compounds, silicon-containing organic compounds, and solid solutions. Examples of a tin compound used for the cathode active material include SnOb (0 < b < 2), SnO2, SnSiO3, Ni2Sn4, and Mg2Sn.

The cathode active material layer may contain a conductive aid together with the cathode active material. Examples of the conductive aid include graphites, such as natural graphite and artificial graphite, and carbon blacks, such as acetylene black, ketjen black, channel black, furnace black, lamp black, and thermal black. Other examples of the conductive aid include conductive fibers, such as carbon fibers, carbon nanotubes, and metal fibers, carbon fluoride, metal powders, such as aluminum, conductive metal oxides, such as conductive whiskers, e.g., zinc oxide, and titanium oxide, and organic conductive materials, such as phenylene dielectrics.

### [Protective Layer]

As the protective material used for the protective layer 23, a material having the effect of protecting the particle portion 22 as described above and the effect of being selectively removed with respect to the particle portion 22 is selected. The protective material may be an inorganic material or an organic material. Examples of organic materials used for the protective layer 23 include polyester, polypropylene, sugar, styrene resins, acrylic resins, urethane resins, vinyl acetate resins, poly(vinyl alcohol) resins, poly(vinyl acetal) resins, and poly(vinyl butyral) resins. Further examples of organic materials used for the protective layer 23 include terpineol resins and ethyl cellulose resins.

From the viewpoint of protecting the particle portion 22 from chemical corrosion and external force, the protective layer 23 is preferably contained in a large excess. The ratio by weight of the protective layer 23 to the particle portion 22 can be 20% or more.

The present invention is not limited to the above-described embodiments, and various changes and modifications can be made without departing from the spirit and scope of the present invention. Therefore, the following claims are attached in order to make the scope of the present invention public.

This application claims priority based on Japanese Patent Application No. 2020-209077 filed on December 17, 2020, which is hereby incorporated by reference herein in its entirety.

## Claims

1. Self-supporting active material particles for use in an active material layer, comprising a particle portion containing an active material, and a protective layer covering a surface of the particle portion.

2. The active material particles according to Claim 1, wherein the protective layer is solid.

3. Active material particles for use in an active material layer, comprising a particle portion containing an active material, and a solid protective layer covering a surface of the particle portion.

4. The active material particles according to any one of Claims 1 to 3, wherein the active material contains an anode active material or a cathode active material.

5. The active material particles according to any one of Claims 1 to 4, wherein the protective layer has no fluidity in a temperature range of 10°C or higher and 30°C or lower.

6. The active material particles according to any one of Claims 1 to 5, wherein the protective layer has a viscosity coefficient of 1,000 Pa·s or less in a temperature range of 10°C or higher and 30°C or lower.

7. The active material particles according to any one of Claims 1 to 6, wherein the protective layer covers the particle portion for each particle portion.

8. The active material particles according to Claim 7, wherein the active material particles have a particle size that is 1.2 or more times larger than the particle size of the particle portion.

9. The active material particles according to any one of Claims 1 to 8, wherein the protective layer covers the surfaces corresponding to the multiple particle portions.

10. The active material particles according to any one of Claims 1 to 9, wherein the protective layer has a sheet-like shape having a layer thickness and extending in a direction intersecting the layer thickness by a distance larger than the layer thickness.

11. The active material particles according to any one of Claims 1 to 10, wherein the protective layer has a property of being selectively removable from the surface while leaving the particle portion.

12. The active material particles according to Claim 11, wherein the property includes an erodibility that permits chemical removal.

13. The active material particles according to Claim 11, wherein the property includes a thermophysical property that permits removal by heating.

14. The active material particles of Claim 11, wherein the property includes a strength property that permits removal by an external force.

15. The active material particles according to any one of Claims 1 to 14, wherein the protective layer continuously covers the surface.
